# EUROPEAN PATENT APPLICATION

(11) **EP 4 748 622 A1**
(43) Date of publication of application: **27.05.2026**
(21) Application number: 25216842.2
(22) Date of filing: 19.11.2025
(51) Int. Cl.: B60L 3/00, B60R 13/08

(54) **VEHICLE COMPRISING AN IMPROVED ELECTRIC SAFETY SYSTEM**

(30) Priority: 21.11.2024 IT 202400026268
(71) Applicant: FPT Industrial S.p.A., 10156 Torino (IT)
(72) Inventor: ROEWER JUNIOR, Guido, 10156 TORINO (IT)
(74) Representative: Studio Torta S.p.A.

(57) **Abstract**

A body comprising a vehicle portion (2) defining a first surface (2') and a second surface (2") opposite the first, at least one of either the first surface (2') or the second surface (2") being provided with an electrical insulation system.

## Description

### CROSS-REFERENCE TO RELATED APPLICATIONS

This patent application claims priority from Italian patent application no. 102024000026268 filed on November 21, 2024, the entire disclosure of which is incorporated herein by reference.

### TECHNICAL SECTOR

This invention relates to a vehicle, in particular a commercial vehicle.

This invention finds its preferred, though not exclusive, application in an at least partially electric vehicle. This application will be referred to below by way of example.

### PRIOR ART

As is well known, vehicles tend to be increasingly electrified in order to reduce their emissions.

This need is all the more pronounced in commercial vehicles, such as light commercial or heavy duty vehicles, where jobs are particularly long with usually large loads.

Electrification therefore involves the increasing use of electric devices, in particular electric cars, electric batteries and electric power management systems.

These electric devices are connected by corresponding wiring, which can be at different electrical voltages.

Both the wiring and the electric devices themselves are usually located in the vicinity of the vehicle body, which, as is well known, is made of metal, and therefore electrically conductive.

Thus, in the event of an accident involving part of the body, for example in the event of a collision, it is possible that the wiring or an electric device may break and generate an electrical bridge with the body.

Such a short-circuit is particularly dangerous as it can both be fatal for a user in contact with the body and can cause fires.

More trivially, this can also result in wear and tear of the electric device or, more likely, of the wiring, which is often more exposed to the elements.

There is, therefore, a need to increase safety in vehicles equipped with electric devices of the above-mentioned type in the event of an accident or accidental breakage.

The purpose of this invention is to meet the needs outlined above in an optimal and inexpensive way.

### SUMMARY OF THE INVENTION

The above-mentioned purpose is achieved with a body and a vehicle as claimed in the attached claims, which are an integral part of this description.

### BRIEF DESCRIPTION OF THE DRAWINGS

For a better understanding of this invention, a preferred embodiment is described below by way of non-limiting example and with reference to the accompanying drawings, wherein:
- Figure 1 is a perspective view of an example vehicle according to the invention in a production step; and
- Figure 2 is a perspective view of an example vehicle according to the invention.

### DETAILED DESCRIPTION OF THE INVENTION

The illustrative figures show a vehicle 1 as a road vehicle. It is clear that such a vehicle can be of any type, and in the case of road vehicles it can be a light commercial vehicle or a heavy duty vehicle or even an off-road vehicle.

In particular, as is well known, the vehicle 1 comprises different portions, for example a body with multiple portions 2.

In particular, these portions 2 are supported by a structural skin possibly supported by a chassis, as known and not further described.

Again, as is obvious, the portions 2 therefore define an external surface 2' facing the outside and an internal surface 2'' opposite the external surface 2'.

The internal surface 2'' may face the structural skin or an interior space 4 of the vehicle, such as a compartment/vehicle space.

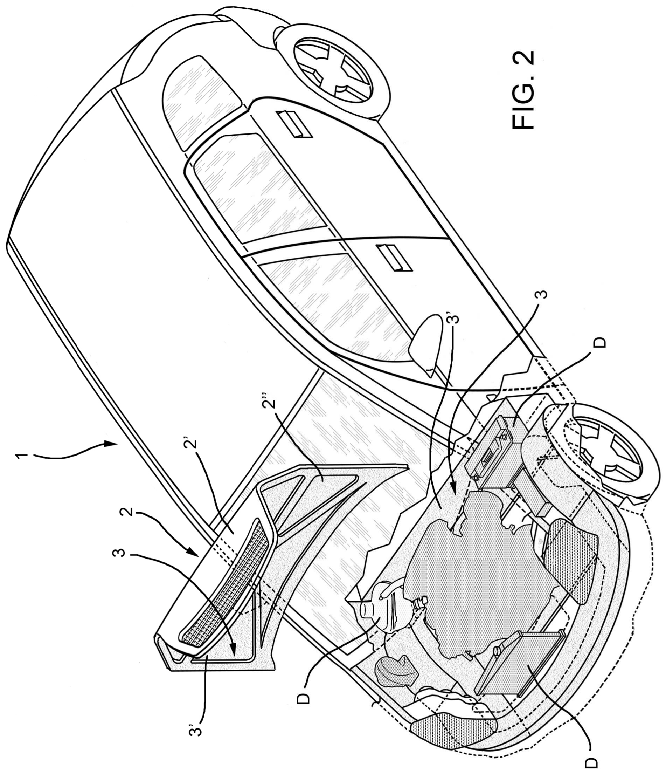

As illustrated in Figure 2, this internal space 4 can accommodate elements operating with electricity, such as electric devices D, for example batteries, inverters, electric machines, operating modules and their wiring.

According to the invention, the internal surface 2'' comprises an electrical insulation system 3 configured to insulate possible electrical discharges from the electrically operated elements supported by the vehicle 1.

Specifically, such an electrical insulation system 3 comprises a painted layer 3', where this paint is an electrically insulating paint.

Advantageously, this painted layer 3' has a variable thickness depending on the level of insulation to be provided, so it can vary from micrometres to several millimetres of paint.

In particular, the painted layer 3' may only be present on a portion of the internal surface 2'' or on the inner internal surface 2'' depending on the type of adjacent electric device D and its arrangement.

The operation of the embodiment of the vehicle portion of the body and of the vehicle according to the invention described above is the following.

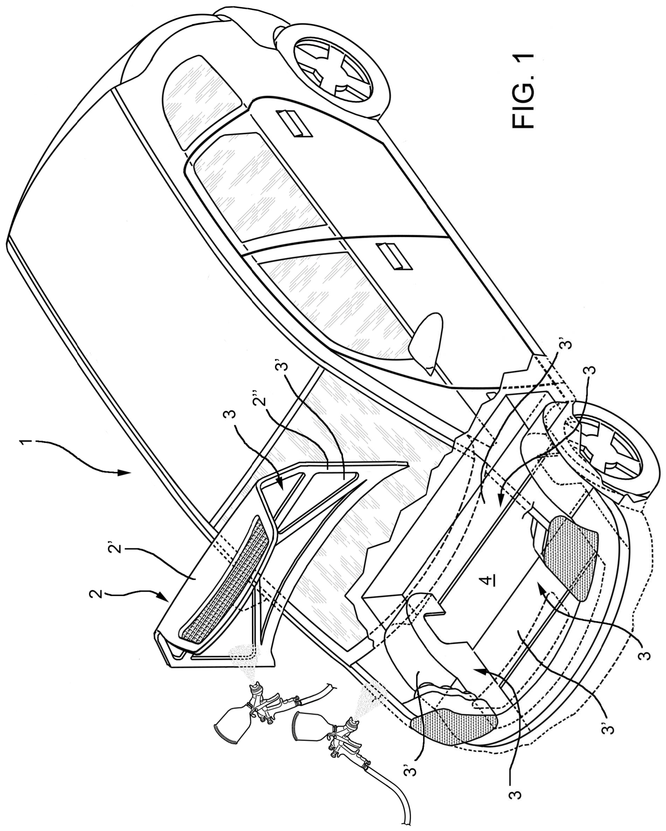

As can be seen in Figure 1, it is possible to apply the paint layer on the internal surface 2', specifically on a part or less than a part, during or before assembly.

Once affixed, should a leakage of current occur due to a collision that breaks a vehicle portion and damages an electric device D or due to deterioration of the device or the wiring, the leakage of current will be non-circuited due to the presence of the painted layer, thus protecting against fire triggers and the possible electrocution of users.

The advantages of a body and a vehicle according to the invention are clear from the foregoing.

Thanks to the electrical insulation system, it is possible to reduce the risk of short-circuiting in the event of an accident or deterioration of vehicle electric devices.

In fact, selective or general securing of vehicle portions to avoid such short-circuits is possible in a way that is both economical and compact.

Specifically, the use of a layer of paint is particularly effective but at the same time economical, light and without the need to substantially revise the vehicle's production.

Lastly, it is clear that modifications may be made to the body, and variations produced thereto, according to this invention, without, however, departing from the scope of protection defined by the claims.

Clearly, the paint can be of any type as long as it is electrically insulating, and its thickness and application vary depending on the type of vehicle and the electric devices in the vehicle.

## Claims

1. A body comprising a vehicle portion (2), said portion (2) defining a first surface (2') facing towards the outside and a second surface (2'') opposite the first, said second surface (2") being provided with an electrical insulation system (3).

2. The body according to claim 1, wherein said electrical insulation system (3) comprises a painted layer (3').

3. The body according to claim 2, wherein said painted layer (3') has a thickness varying from a few microns to a few millimetres.

4. The body according to claim 2 or 3, wherein said painted layer (3') extends over at least part of said first surface (2') and said second surface (2'').

5. The body according to one of claims 2 to 4, wherein said painted layer (3') is made of electrically insulating paint.

6. A vehicle comprising a body according to any of the previous claims.
